# EUROPEAN PATENT SPECIFICATION

(11) **EP 3 466 716 B1**
(45) Date of publication and mention of the grant of the patent: **19.03.2025**
(21) Application number: 16902626.7
(22) Date of filing: 24.05.2016
(51) Int. Cl.: B60B 9/28, B60B 1/04, B60B 25/02, B60B 1/06

(54) **DEFORMABLE TIRE**
VERFORMBARER REIFEN
PNEU DÉFORMABLE

(43) Date of publication of application: 10.04.2019
(73) Proprietor: Lin, Po-Kang, Taipei 104 (TW)
(72) Inventor: Lin, Po-Kang, Taipei 104 (TW)
(74) Representative: Gee, Steven William
(86) International application number: PCT/CN2016/000276
(87) International publication number: WO 2017/201636

(56) References cited:
- AU-B2- 2001 291 482
- CN-A- 101 462 462
- CN-A- 103 963 556
- CN-A- 103 963 556
- CN-Y- 2 461 792
- CN-Y- 200 945 801
- CN-Y- 200 948 729
- CN-Y- 200 948 729
- DE-C- 17 678
- DE-C- 273 205
- DE-C- 273 205
- KR-A- 20150 102 886
- US-A- 3 590 897
- US-A- 4 108 231
- US-A- 669 793

## Description

### BACKGROUND OF THE INVENTION

### 1. Field of the Invention

The present invention relates to a deformable tire, more particularly, relates to a tire with elastic spokes.

### 2. The Prior Art

A tire is a round object that can rotate around an axis thereof so as to decrease friction during movement. Once a tire is equipped with an axle, it is transformed into a primary component of various kinds of vehicles. Tires are one of the most important inventions in human history and are rather useful in the field of transportation. A conventional tire usually consists of a tire frame with spokes and a rubber tire body.

In a conventional tire structure, a rubber tire body usually has a circular shape so as to be wrapped around a tire frame. Generally, a tire frame is formed with multiple spokes that are fixed on a core structure. Vehicles that are equipped with such conventional tires are meant to travel on flat surfaces. When it comes to ground with height differences such as a staircase, such conventional tires become ineffective. Since conventional tires are not designed for climbing, the vehicles equipped with such tires may experience inconvenience when travelling on ground with height differences. For example, small vehicles such as bicycles and wheelchairs equipped with conventional tires are likely to experience such inconvenience. In particular, wheelchair users, who are usually incapable of walking, may experience great trouble if the wheelchair is not capable of climbing.

Based on the above reasons, there is an urgent need in the industry to develop a deformable tire based on elastic spokes, so vehicles equipped with such deformable tires are enabled to climb surfaces with height differences.

KR 2015 0102886 discloses a deformable tire comprising a plurality of spokes connected to a hub or core structure. Each of the spokes is also connected to a tire body by way of a movable connection whereby the tire bodies can deflect from a circumferential orientation during use.

### SUMMARY OF THE INVENTION

In view of the foregoing drawbacks, a primary objective of the present invention is to provide a deformable tire including a plurality of spokes.

The invention provides a deformable tire according to claim 1.

Each of the first lengths is dynamically adjusted to a second length. Preferably, the second length is smaller than the first length.

Other purposes, advantages and innovative features of the present invention will become apparent by reading the following detailed description together with the accompanying drawings.

### BRIEF DESCRIPTION OF THE DRAWINGS

The present invention is best understood from the following detailed description when read in connection with the accompanying drawings. In order to achieve the foregoing objectives of the present invention, preferable embodiments of the present invention are illustrated in the drawings. It should be understood that the present invention should not be limited by the exact configuration, structure and apparatus illustrated in the drawings.
Fig. 1 is a schematic view illustrating the structure of a deformable tire according to a first embodiment of the present invention;
Fig. 2a is a schematic view illustrating an arrangement of the tire bodies of the deformable tires according to the first embodiment of the present invention;
Fig. 2b is a schematic view illustrating an arrangement of the tire bodies of the deformable tires according to another design;
Fig. 3 is a schematic view illustrating the operation of the deformable tire according to the first embodiment of the present invention;
Fig. 4 is a schematic view illustrating the structure of a deformable tire according to a second embodiment of the present invention; and
Fig. 5 is a schematic view illustrating the accommodation of the deformable tire according to another design, which does not form part of the present invention.

### DETAILED DESCRIPTION OF THE PREFERRED EMBODIMENT

The present invention will be described in detail with reference to the accompanying drawings in the following section. It should be noted that the drawings are not necessarily drawn to scale for the purpose of simplicity.

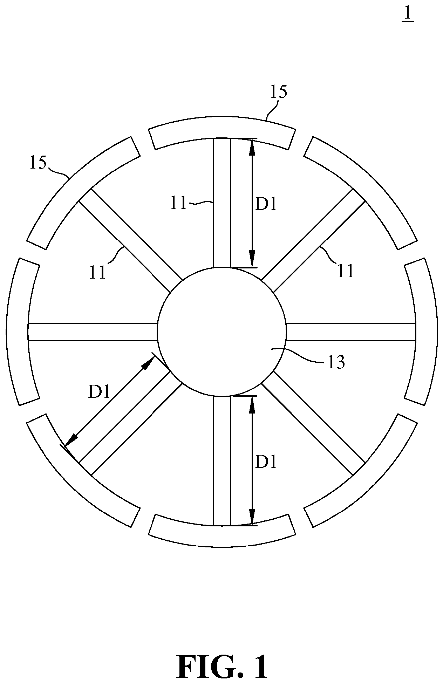

Fig. 1 is a schematic view illustrating the structure of a deformable tire according to a first embodiment of the present invention. As shown in Fig. 1, according to the first embodiment of the present invention, the deformable tire 1 includes a plurality of spokes 11. A first end of each of the spokes 11 is connected to a core structure 13. A second end of each of the spokes 11 is connected to a tire body 15. A first length D1 is provided between each of the tire bodies 15 and the core structure 13. Herein, the spokes 11 are elastic. The core structure 13 is configured to fix and support the spokes 11, and each of the first lengths D1 is dynamically adjusted by the elasticity of the spokes 11. It should be understood that the structure of the tire body 15 is substantially similar to the tire bodies available on the market. The difference between the two lies in that each of the tire bodies 15 connected by the spokes 11 of the present invention are not in connection with each other and may be adjusted according to the type of the vehicle. For example, the tire bodies 15 may be adjusted and changed into bicycle tires or wheelchair tires. In addition, in the present invention the spokes 11 are configured as elastic structures. Furthermore, the number of the spokes 11 shown in the figures is merely for the purpose of illustration and may be adjusted according to the needs of the user or the vehicle.

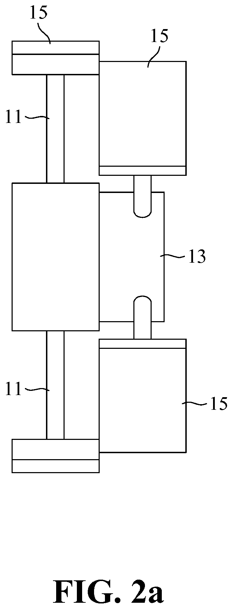

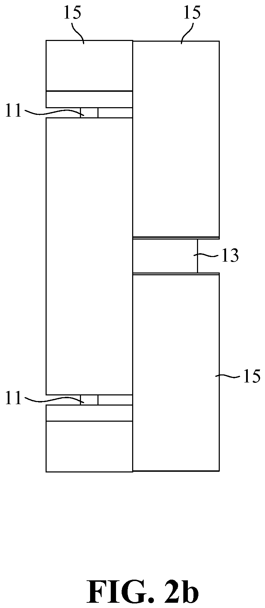

Fig. 2a is a schematic view illustrating an arrangement of the tire bodies of the deformable tires according to the first embodiment of the present invention. As shown in Fig. 2a, which is a side view of the deformable tire 1 according to the first embodiment of the present invention, it can be seen that the tire bodies 15 are fixed on the core structure 13 via the spokes 11. The tire bodies 15 are arranged in two lines, which are parallel to and staggered with each other, around the core structure 13. Herein, each of the tire bodies 15 in the two lines of the tire bodies 15 are not in connection with each other, and the two lines of the tire bodies 15 are arranged so the tire bodies 15 are not overlapped with each other. By arranging the tires bodies 15 in two staggered lines that are not overlapped with each other, the deformable tire 1 may have a high climbing efficiency. Fig. 2b is a schematic view illustrating an arrangement of the tire bodies of the deformable tires according to another design. As shown in Fig. 2b, which is a side view illustrating the deformable tire 1 according to another design, it can be seen that the tire bodies 15 are fixed on the core structure 13 via the spokes 11. The tire bodies 15 are arranged in two lines, which are parallel to and staggered with each other, around the core structure 13. Herein, each of the tire bodies 15 in the two lines of the tire bodies 15 are not in connection with each other, and the two lines of the tire bodies 15 are arranged so the tire bodies 15 are overlapped with each other. By arranging the tires bodies 15 in two staggered lines that are overlapped with each other, the deformable tire 1 may have a higher stability. The tire bodies with overlapping arrangement and non-overlapping arrangement each has its own merits, and thus may be applied to various vehicles that are suitable for various types of ground surfaces.

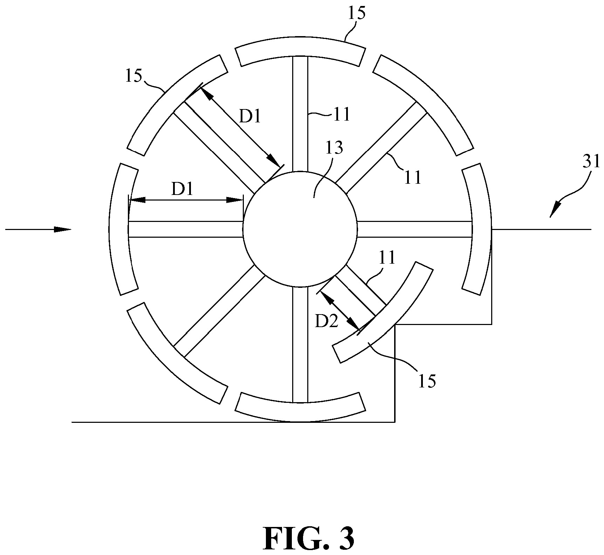

Fig. 3 is a schematic view illustrating the operation of the deformable tire according to the first embodiment of the present invention. As shown in Fig. 3, when the deformable tire 1 of the first embodiment of the present invention is near and about to climb a staircase 31, one of the spokes 11 will come into contact with the staircase 31 via the tire body 15 connected thereto. Due to its inherent elasticity, the spoke 11 in contact with the staircase 31 is dynamically adjusted to a second length D2 that is smaller than the first length D1. After one of the spokes 11 is compressed to the second length D2, it will stretch back to the first length D1 again by pushing against the staircase 31 via the elasticity thereof. In such a way, the deformable tire 1 may achieve climbing with the elasticity of the spokes 11.

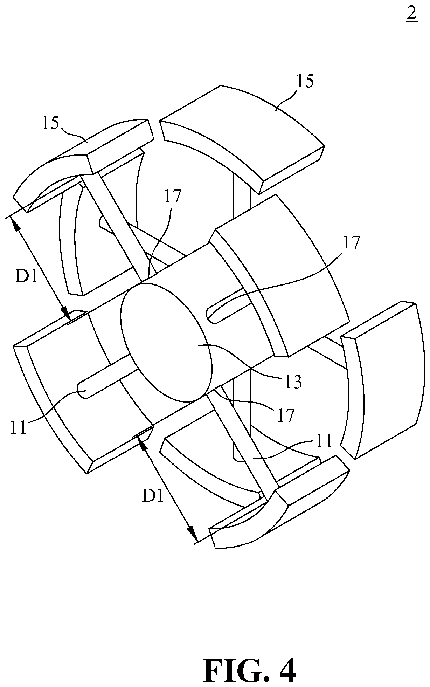

Fig. 4 is a schematic view illustrating the structure of a deformable tire according to a second embodiment of the present invention. Referring to Fig. 4, the deformable tire 2 includes a plurality of spokes 11. A first end of each of the spokes 11 is connected to a core structure 13. A second end of each of the spokes 11 is connected to a tire body 15. A first length D1 is provided between each of the tire bodies 15 and the core structure 13. Herein, the spokes 11 are elastic. The core structure 13 is configured to fix and support the spokes 11, and each of the first lengths D1 is dynamically adjusted by the inherent elasticity of the spokes 11. Each of the first lengths D1 is adjusted by the inherent elasticity of each of the spokes 11. It should be understood that the structure of the tire body 15 is substantially similar to the tire bodies available on the market. The difference between the two lies in that each of the tire bodies 15 connected by the spokes 11 of the present invention are not in connection with each other and may be adjusted according to the type of the vehicle. For example, the tire bodies 15 may be adjusted and changed into bicycle tires or wheelchair tires. In addition, in the second embodiment of the present invention, the spokes 11 may be configured as other elastic structures. Based on the above description, it can be known that the structure of the deformable tire 2 of the second embodiment of the present invention is substantially similar to the structure of the deformable tire 1 of the first embodiment of the present invention. Hence, the operation of the deformable tire 2 is also the same as the deformable tire 1 in the first embodiment. Furthermore, the number of the spokes 11 shown in the figures is merely for illustration and may be adjusted according to the needs of the user or the vehicle.

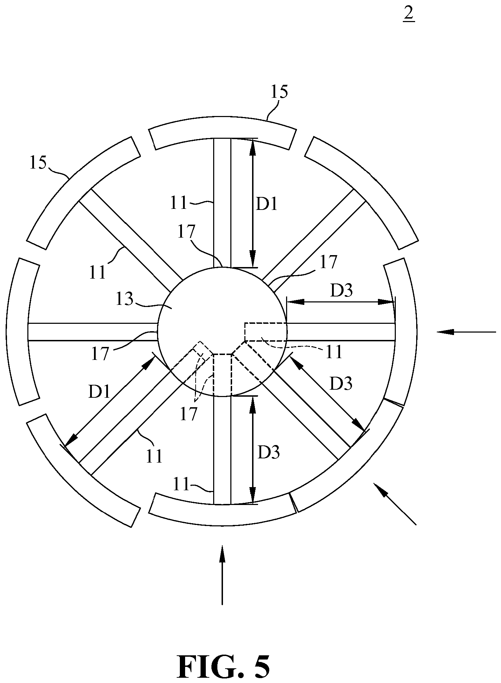

Fig. 5 is a schematic view illustrating the accommodation of the deformable tire according to another design. Referring to Fig. 5, the deformable tire 2 according to this design is configured to accommodate via the holes 17. More particularly, the spokes 11 may move toward the core structure 13 via the holes 17 so as to adjust the first length D1 to a third length D3. Herein, the third length D3 is smaller than the first length D1. In an accommodated state, the spokes 11 are configured to penetrate into the core structure 13 through the holes 17. As a result, the overall size of the deformable tire 2 may be reduced, and the deformable tire 2 may be accommodated and carried more easily. It can be known from Figs. 2a and 2b that the spokes 11 and the tire bodies are arranged on the core structure 13 in two parallel lines that are staggered with each other. Therefore, the spokes 11 are refrained from interfering with each other and also refrained from further affecting the accommodation process when being retracted toward the center of the core structure 13. Moreover, the depths provided by the holes 17 for receiving the spokes 11 may be adjusted accordingly based on the needs of the users. In some other designs, each of the spokes 11 may even wholly enter the holes 17 provided on the core structure 13 so as to minimize the size of the deformable tire 2.

It can be known from the above description that a deformable tire, which is capable of climbing and is easy to be accommodated, is provided by the present invention. The deformable tire of the present invention is applicable to various types of vehicles, in particular, is applicable to bicycles and wheelchairs. A bicycle equipped with the deformable tire of the present invention may be able to freely climb various types of stairs. On the other hand, a wheelchair with the deformable tire of the present invention on its both sides may also be able to climb various types of stairs, so people with disabilities are enabled to climb stairs as well.

Although the present invention has been described with reference to the preferred embodiments thereof, it is apparent to those skilled in the art that a variety of modifications and changes may be made without departing from the scope of the present invention which is intended to be defined by the appended claims.

## Claims

1. A deformable tire (1), comprising:
a plurality of spokes (11), wherein a first end of each of the spokes is connected to a core structure (13), and a second end of each of the spokes is connected to a tire body (15), wherein a first length (D1) is provided between each of the tire bodies and the core structure connected by each of the spokes;
wherein the tire bodies (15) are fixed on the core structure (13) via the spokes (11) so that the tire bodies are movable in the direction towards the center of the core structure, and the tire bodies are arranged in two lines and are parallel to each other in an axial direction, and staggered in a circumferential direction; and
wherein each of the tire bodies (15) in the two lines of the tire bodies are not in connection with each other, and the two lines of the tire bodies are arranged so the tire bodies are not overlapped with each other in a circumferential direction,
**characterised in that**:
the first end of each of the spokes (11) is immovable relative to the core structure (13),
**in that** the spokes are made of an elastic material whereby the spokes have an elastic structure, and
**in that** each of the first lengths (D1) between the first end of a spoke and the second end of a spoke is dynamically adjustable by way only of the elasticity of the spoke material.

2. The deformable tire according to claim 1, wherein each of the first lengths (D1) is dynamically adjustable to a second length (D2), and the second length is smaller than the first length.

## Patentansprüche

1. Ein verformbarer Reifen (1), umfassend:
eine Vielzahl von Speichen (11), wobei ein erstes Ende jeder der Speichen mit einer Kernstruktur (13) verbunden ist und ein zweites Ende jeder der Speichen mit einem Reifenkörper (15) verbunden ist, wobei eine erste Länge (DI) zwischen jedem der Reifenkörper und der durch jede der Speichen verbundenen Kernstruktur vorgesehen ist;
wobei die Reifenkörper (15) über die Speichen (11) an der Kernstruktur (13) befestigt sind, so dass die Reifenkörper in Richtung der Mitte der Kernstruktur beweglich sind, und die Reifenkörper in zwei Linien angeordnet sind und in einer axialen Richtung parallel zueinander und in einer Umfangsrichtung versetzt sind; und
wobei jeder der Reifenkörper (15) in den zwei Linien der Reifenkörper nicht miteinander in Verbindung steht und die zwei Linien der Reifenkörper so angeordnet sind, dass die Reifenkörper in einer Umfangsrichtung nicht miteinander überlappt sind,
**dadurch gekennzeichnet**:
das erste Ende jeder der Speichen (11) ist relativ zur Kernstruktur (13) unbeweglich,
dass die Speichen aus einem elastischen Material hergestellt sind, wobei die Speichen eine elastische Struktur aufweisen, und
dass jede der ersten Längen (DI) zwischen dem ersten Ende einer Speiche und dem zweiten Ende einer Speiche allein durch die Elastizität des Speichenmaterials dynamisch einstellbar ist.

2. Verformbarer Reifen nach Anspruch 1, wobei jede der ersten Längen (DI) dynamisch auf eine zweite Länge (D2) einstellbar ist und die zweite Länge kleiner ist als die erste Länge.

## Revendications

1. Pneu déformable (1), comprenant :
une pluralité de rayons (11), une première extrémité de chacun des rayons étant reliée à une structure centrale (13), et une seconde extrémité de chacun des rayons étant reliée à un corps de pneu (15), une première longueur (DI) étant prévue entre chacun des corps de pneu et la structure centrale reliée par chacun des rayons ;
dans lequel les corps de pneu (15) sont fixés sur la structure de base (13) par l'intermédiaire des rayons (11) de sorte que les corps de pneu sont mobiles en direction du centre de la structure de base, et les corps de pneu sont disposés en deux lignes et sont parallèles l'un à l'autre dans une direction axiale, et en quinconce dans une direction circonférentielle ; et
dans lequel chacun des corps de pneu (15) des deux lignes de corps de pneu n'est pas relié à l'autre, et les deux lignes de corps de pneu sont disposées de manière à ce que les corps de pneu ne se chevauchent pas l'un l'autre dans une direction circonférentielle,
caractérisé en cela :
la première extrémité de chacun des rayons (11) est inamovible par rapport à la structure centrale (13),
en ce que les rayons sont fabriqués dans un matériau élastique, les rayons ayant une structure élastique, et
en ce que chacune des premières longueurs (DI) entre la première extrémité d'un rayon et la seconde extrémité d'un rayon est réglable dynamiquement par le seul biais de l'élasticité du matériau du rayon.

2. Pneu déformable selon la revendication 1, dans lequel chacune des premières longueurs (DI) est dynamiquement ajustable à une seconde longueur (D2), et la seconde longueur est plus petite que la première.
